# EUROPÄISCHE PATENTSCHRIFT

(11) **EP 1 053 143 B1**
(45) Veröffentlichungstag und Bekanntmachung des Hinweises auf die Patenterteilung: **08.12.2004**
(21) Anmeldenummer: 99950484.8
(22) Anmeldetag: 31.07.1999
(51) Int. Cl.: B60S 1/38, B60S 1/40

(54) **VORRICHTUNG ZUM GELENKIGEN VERBINDEN EINES WISCHBLATTS FÜR SCHEIBEN VON KRAFTFAHRZEUGEN MIT EINEM WISCHERARM**
DEVICE FOR AN ARTICULATED CONNECTION BETWEEN A WIPER BLADE FOR PANELS OF GLASS IN MOTOR VEHICLES AND A WIPER ARM
DISPOSITIF POUR L'ASSEMBLAGE ARTICULE D'UNE RACLETTE D'ESSUIE-GLACE POUR VITRES DE VEHICULES AUTOMOBILES AVEC UN BRAS D'ESSUIE-GLACE

(30) Priorität: 07.12.1998 DE 19856299
(43) Veröffentlichungstag der Anmeldung: 22.11.2000
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE1999/002367
(87) Internationale Veröffentlichungsnummer: WO 2000/038962

(56) Entgegenhaltungen:
- DE-A- 19 739 256
- US-A- 2 794 203
- US-A- 3 296 647
- US-A- 3 317 945
- US-A- 3 881 214

## Beschreibung

### Stand der Technik

Eine bekannte Verbindungsvorrichtung der im Oberbegriff des Anspruch 1 bezeichneten Art sitzt mit ihrem wischblattseitigen Kupplungselement auf der oberen Bandfläche des Tragelements, welches den von der Scheibe abgewandten Abschluß des Wischblatts bildet (DE 1972 98 65.6 A1).

Wenn das Wischblatt jedoch zum Vermeiden der bei höheren Fahrgeschwindigkeiten auftretenden Abhebebestrebungen des Wischblatts von der Scheibe mit einer Windabweisleiste versehen werden soll, muß diese in dem für die Verbindungsvorrichtung vorgesehenen, im Längs-Mittelabschnitt befindlichen Montagebereich entsprechend ausgespart werden, damit das blattseitige Kupplungselement ordnungsgemäß befestigt werden kann. Bei einer im Preßverfahren hergestellten Wischleiste muß dies mit Hilfe einer aufwendigen Preßform bewerkstelligt werden, während bei einer extrudierten Wischleiste dazu ein zusätzlicher Arbeitsgang erforderlich ist. Die Unterbrechung des Verlaufs der Windabweisleiste wirkt sich darüber hinaus jedoch störend auf die Auflagekraftverteilung der Wischleistung an der Scheibe aus. Weiter führt die Unterbrechung der an der Windabweisleiste vorhandenen Fahrtwind-Anströmfläche zu einer unerwünschten Verstärkung der Fahrtwindgeräusche.

### Vorteile der Erfindung

Bei der erfindungsgemäßen Verbindungsvorrichtung mit den kennzeichnenden Merkmalen des Anspruchs 1 wird die Anströmfläche über die Verbindungsvorrichtung fortgeführt, so daß allenfalls eine kleine Lücke verbleibt, welche hinsichtlich der Auflagekraftverteilung und der Geräuschbildung vernachlässigt werden kann.

Auf einfache Weise kann die Anströmfläche des Kupplungsteils an einem an diesem angeordneten, leistenartigen Vorsprung ausgebildet sein, der wenigstens annähernd mit der Windabweisleiste fluchtet.

Wenn der leistenartige Vorsprung von dem von der Gelenkachse der Verbindungsvorrichtung abgewandten Ende des Kupplungsteils ausgehend sich zur Gelenkachse hin erstreckt ist ein kontinuierlicher Übergang der Windabweisleistenanströmfläche zur Anströmfläche der Verbindungsvorrichtung gewährleistet wobei im Bereich der Gelenkachse ein kleiner, für den Anschluß des Wischblatts an den Wischerarm erforderlicher Abstand verbleiben kann.

Eine besonders vorteilhafte, montagefreundliche Ausgestaltung des wischerarmseitigen Kupplungsteils ist erreicht, wenn in Weiterbildung der Erfindung das Kupplungsteil einen U-förmigen Querschnitt hat, die Lagerausnehmungen am einen Längs-Endabschnitt in den die Seitenwangen des Kupplungselements überdeckenden U-Schenkeln angeordnet sind, der leistenartige Vorsprung an der von den U-Schenkeln abgewandte Seite der U-Basis angeordnet ist und der leistenartige Vorsprung mit Abstand von der gemeinsamen Gelenkachse der Lagerausnehmung endet.

Eine Fortbildung des Erfindungsgedanken zeichnet sich dadurch aus, daß die U-Basis im Bereich der Gelenkachse mit einer bis zum Vorsprung reichenden Aussparung versehen ist und das Kupplungselement an seiner der U-Basis zugewandten Seite einen die Aussparung durchdringenden Vorsprung hat, an dem eine mit der Anströmfläche des Kupplungsteils fluchtende Ergänzungs-Anströmfläche ausgebildet ist. Dadurch ist es möglich die Anströmfläche ohne Beeinträchtigung der beim Anschließen des Wischblatts an den Wischerarm erforderlichen Arbeitsschritte über dessen gesamte Länge ohne Unterbrechung fortzuführen. Dadurch werden besonders gute Werte hinsichtlich der Auflagekraftverteilung und der Geräuschbildung erreicht.

Die Montierbarkeit einer solchen Verbindungsvorrichtung wird weiter verbessert, wenn die einander benachbarten Enden des Vorsprungs und des Ansatzes je einem Radius verfolgend gekrümmt verlaufend und die Zentren der Krümmungsradien auf der Gelenkachse liegen.

Eine kostengünstige Fertigung der Verbindungsvorrichtung ergibt sich, wenn sowohl der Vorsprung als auch der Ansatz einstückig mit dem Kupplungsteil bzw. mit dem Kupplungselement verbunden sind.

Wenn gemäß einer anderen Ausführungsform der Erfindung der leistenförmige Vorsprung des Kupplungsteils zwischen einer Montage- und einer Betriebsposition längs-verschiebbar und festsetzbar ist wobei in Betriebsposition das der Gelenkachse zugewandte Ende des Vorsprungs der Windabweisleiste des Wischblatts benachbart ist, ist der für die Montage erforderliche Abstand zwischen Windabweisleiste und Vorsprung nachträglich reduzierbar bzw. vollständig zu eliminieren.

Der Vorsprung läßt sich weitgehend in den Verlauf der Windabweisleiste integrieren, wenn der leistenförmige Vorsprung an seinem von der Gelenkachse abgewandten Ende und an seiner von seiner Anströmfläche abgewandten Rückseite einen Freischnitt hat, der in Längsrichtung gemessen etwa so groß ist wie der maximale Längsverschiebeweg des Vorsprungs.

Zweckmäßig sind sowohl das Kupplungsteil als auch das Kupplungselement aus einem Kunststoff hergestellt.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

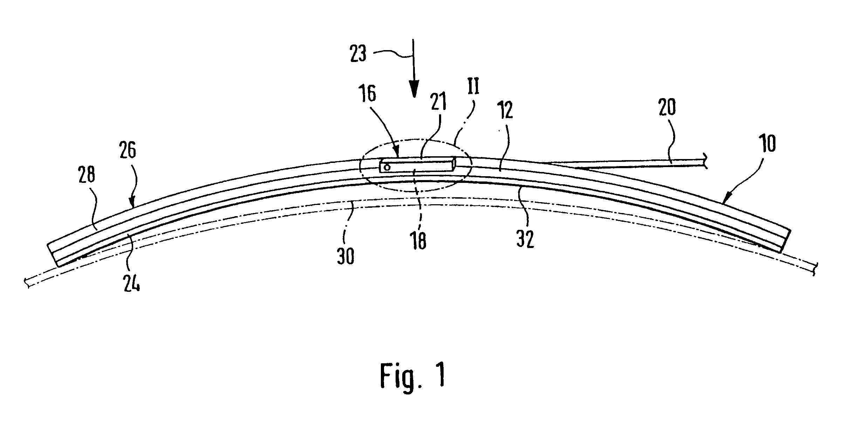

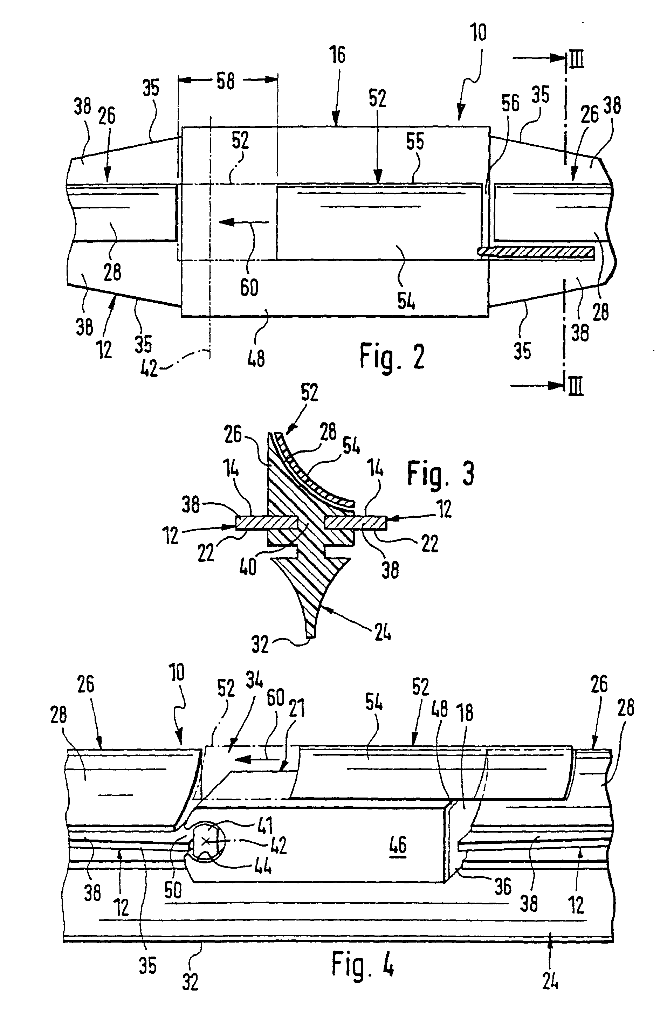

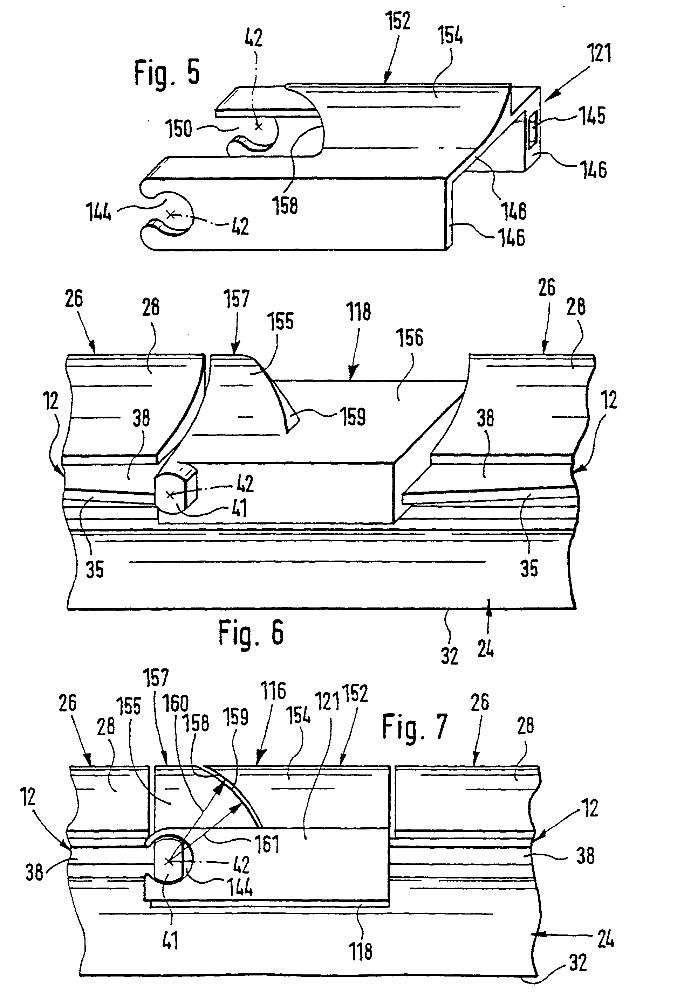

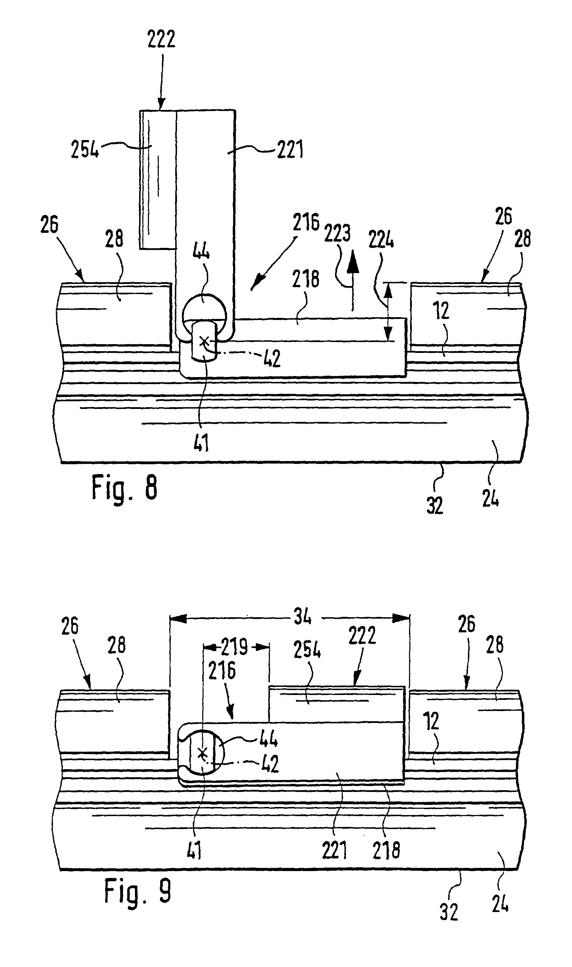

In der Zeichnung zeigen: Figur 1 eine Seitenansicht eines Wischblatts, das mit einer Verbindungsvorrichtung an einen Wischerarm angeschlossen ist, Figur 2 eine in Figur 1 mit II bezeichnete, die Verbindungsvorrichtung in Draufsicht zeigende Einzelheit in vergrößerter Darstellung, Fig. 3 einen Schnitt entlang der Linie III-III durch die Verbindungsvorrichtung gemäß Fig. 2 um 90° gedreht, Figur 4 die Anordnung gemäß Figur 2 in einer perspektivischen Seitenansicht, Figur 5 eine andere Ausführung des Kupplungsteils in perspektivischer Darstellung, Figur 6 das im Mittelabschnitt eines Wischblatts angeordnete, zum Kupplungsteil gemäß Figur 5 gehörende Kupplungselement, Figur 7 die aus den Bauteilen gemäß den Figuren 5 und 6 montierte Verbindungsvorrichtung in Seitenansicht, Figur 8 eine weitere Verbindungsvorrichtung in Seitenansicht, wobei das wischerarmseitige Kupplungsteil in Montagestellung dargestellt ist und Fig. 9 die Anordnung gemäß Fig. 8 mit in Betriebstellung gezeichneten Kupplungsteil.

### Beschreibung der Ausführungsbeispiele

Ein in Figur 1 dargestelltes Wischblatt 10 weist ein bandartig langgestrecktes, federelastisches Tragelement 12 auf. An der von der zu wischenden Scheibe abgewandten BandOberseite 14 des Tragelements 12 ist ein zu einer Verbindungsvorrichtung 16 gehörendes, aus einem Kunststoff hergestelltes Kupplungselement 18 angeordnet, mit dessen Hilfe das Wischblatt 10 mit einem an der Karosserie eines Kraftfahrzeugs geführten, zwischen Umkehrlagen bewegbaren Wischerarm 20 lösbar verbunden werden kann. Dazu ist der Wischerarm an seinem freien Ende mit einem ebenfalls zur Verbindungsvorrichtung 16 gehörenden, aus Kunststoff gefertigten Kupplungsteil 21 versehen. An der der Scheibe zugewandten Band-Unterseite 22 des Tragelements 12 ist eine langgestreckte, gummielastische Wischleiste 24 längsachsenparallel zu diesem angeordnet. Die Wischleiste 24 erstreckt sich mit einem leistenartigen Ansatz 26 über die Oberseite 14 des Tragelements 12 hinaus, welcher an der Oberseite des Tragelements eine mit einer Anströmfläche oder Anströmkehle 28 versehene Windabweisleiste bildet. Das Kupplungsteil 21 und das Kupplungselement 18 bilden zusammen die Verbindungsvorrichtung 16, auf deren Aufbau noch näher eingegangen wird. Der Wischerarm 20 und damit auch das Wischblatt 10 ist in Richtung des Pfeiles 23 zur zu wischenden Scheibe belastet, deren zu wischende Oberfläche in Figur 1 durch eine strichpunktierte Linie 30 angedeutet ist. Da die strichpunktierte Linie 30 die stärkste Krümmung der Scheibenoberfläche darstellen soll ist klar ersichtlich, daß die Krümmung des mit seinen beiden Enden an der Scheibe anliegenden Wischblatts 10 stärker ist als die maximale Scheibenkrümmung. Unter dem Anpreßdruck (Pfeil 23) legt sich das Wischblatt 10 mit seiner Wischlippe 32 über seine gesamte Länge an der Scheibenoberfläche 28 an. Dabei baut sich im federelastischen Tragelement 12 eine Spannung auf, welche für eine ordnungsgemäße Anlage der Wischleiste 24 bzw. der Wischlippe 32 über deren gesamte Länge an der Kraftfahrzeugscheibe sorgt.

Im Folgenden soll nun auf die besondere Ausgestaltung der Verbindungsvorrichtung 16 näher eingegangen werden. Eine erste Ausführungsform der erfindungsgemäßen Verbindungsvorrichtung 16 - gemäß den Figuren 2 bis 4 - ist in ihrem Grundaufbau für den Aufbau auch der weiteren Ausführungsformen gemäß den Figuren 5 bis 7 und 8 und 9 gültig. Wie insbesondere Figur 4 zeigt, sitzt das wischblattseitige Kupplungselement 18 in einer Längsaussparung 34 der Windabweisleiste 26 welche durch den im Längsmittelabschnitt des Wischblatts 10 angeordnete Längsaussparung 34 nun zwei Teilstücke aufweist. Das vorzugsweise aus Kunststoff hergestellte Kupplungselement 18 sitzt auf der Oberseite 14 des Tragelements 12 und umgreift dessen Längskanten 35 bis zu dessen Unterseite 22 (Figur 4). Wie Figur 3 zeigt, hat das Tragelement 12 zwei Längsschienen 38, die mit Abstand voneinander angeordnet sind. Die Wischleiste 24 quert mit einer Stegleiste 40 die Ebene des Tragelements 12 und bildet auf dessen Oberseite 14 einen Ansatz 26 mit einer Anströmkehle 28 (Figur 3), welche für einen verbesserten Anpreßdruck der Wischlippe 32 an der zu wischenden Scheibenoberfläche 30 sorgt. Das Kupplungselement 18 weist an seinen beiden einander gegenüberliegenden Längsseiten je einen Gelenkzapfen 41 auf, der jeweils aus der Längsseite des Wischblatts 10 vorspringt. Die beiden Gelenkzapfen 41 haben eine gemeinsame Längsachse 42 die sich quer zur Wischblattlängsrichtung in einer zur Scheibe beabstandeten Ebene erstreckt (Figur 1 und 4). Die beiden Gelenkzapfen 41 bilden wischblattseitige Gelenkmittel, welche jeweils in einer Lagerausnehmung 44 des wischerarmseitigen Kupplungsteils 21 geführt sind. Die Längsachsen 42 der Gelenkzapfen 41 und der Lagerausnehmungen 44 bilden eine Gelenkachse, um welche eine Relativbewegung zwischen dem Kupplungselement 18 und dem Kupplungsteil 21 bzw. zwischen dem Wischblatt 10 und dem Wischerarm 20 möglich ist. Dies gilt für alle hier beschriebenen Ausführungsformen der Erfindung. Das Kupplungsteil 21 hat einen im wesentlichen U-förmigen Querschnitt. In seinen U-Schenkeln 46 sind die Lagerausnehmungen 44 für die Gelenkzapfen 41 angeordnet. Die Lagerausnehmungen 44 sind über eine Einführöffnung 50 für die im Querschnitt unrunden Gelenkzapfen 41 randoffen.

In Figur 4 sind lediglich der eine der beiden Gelenkzapfen 41 und die eine der beiden Lagerausnehmungen 44 dargestellt. Da die andere Seite der Verbindungsvorrichtung 16 entsprechend der sichtbaren einen Längsseite ausgebildet ist, erübrigt sich deren Beschreibung, zumal in Figur 2 mit der strichpunktierten Linie 42 die gemeinsame Längsachse der beiden Gelenkzapfen 41 bzw. der beiden Lagerausnehmungen 44 angegeben ist.

Um die Längsaussparung 34 für den Wischbetrieb zu schließen weist das Kupplungsteil 21 an der vom Kupplungselement 18 abgewandten Seite der U-Basis 48 einen leistenartigen Vorsprung 52 auf, der sich in Längsrichtung des Wischblatts 10 und damit auch in Längsrichtung der Windabweisleiste 26 erstreckt. Der Vorsprung 52 ist mit einer Anströmkehle 54 versehen, welche sich über die gesamte Länge des Vorsprungs 52 erstreckt. Die Anströmkehle 54 des Vorsprungs 52 liegt bei diesem Ausführungsbeispiel geringfügig vor der Anströmkehle 28 der Windabweisleiste 26. Dadurch ist es möglich, den Vorsprung 52 auf seiner von seiner Anströmkehle 54 abgewandten Rückseite 55 und an seinem von der Gelenkachse 42 abgewandten Ende mit einer Aussparung 56 zu versehen, die so groß ist, daß der Vorsprung in Längsrichtung um ein Maß 58 (Fig. 2) verschiebbar ist. In den Figuren 2 und 4 ist der Vorsprung in einer Stellung gezeichnet, welche ein problemloses Montieren des Wischblatts 10 an den Wischerarm 20 ermöglicht. Seine Betriebsposition ist dort strichpunktiert dargestellt. Der Montagevorgang wird später noch anhand der Figuren 8 und 9 erläutert werden. Nach dem Zusammenbau der Verbindungsvorrichtung 16 (Figur 4), wenn die U-Schenkel 46 des Kupplungsteils 21 die Seitenwangen des Kupplungselement 18 überdecken, kann der Vorsprung 52 in Richtung des Pfeiles 60 um das Maß 58 verschoben werden, so daß in der nun erreichten Betriebsposition das der Gelenkachse 42 zugewandte Ende des Vorsprungs der Windabweisleiste 26 des Wischblatts 10 direkt benachbart ist.

Wenn die Aussparung 56 an dem der Gelenkachse 42 zugewandten Ende des Vorsprungs 52 angeordnet wird, kann dieser fest mit dem Kupplungsteil 21 verbunden werden, ohne daß die Montage des Wischblatts 10 an den Wischerarm 20 behindert wird.

Eine andere Ausführungsform 116 der erfindungsgemäßen Verbindungsvorrichtung wird im Folgenden anhand der Figuren 5 bis 7 erläutert. Figur 5 zeigt besonders anschaulich den Aufbau des wischerarmseitigen Kupplungsteils 121 mit seinem im wesentlichen U-förmigen Querschnitt. Dieser grundsätzliche Aufbau ist auch bei der Ausführungsform gemäß den Figuren 2 bis 4 vorhanden. Weiter zeigt Figur 5 die Anordnung der beiden Lagerausnehmungen 144 in den U-Schenkeln 146 des Kupplungsteils 121. Weiter ist aus Figur 5 ersichtlich, daß der eine, hintere U-Schenkel 146 mit einer Aufnahmeöffnung 145 für den Wischerarm 20 ausgestattet ist. Bei dieser Ausführungsform ist ebenfalls an der Außenseite der U-Basis 148 ein einstückig mit dieser verbundener, leistenartiger Vorsprung 152 vorhanden, der sich in Längsrichtung des Wischblatts erstreckt und mit einer Anströmkehle 154 versehen ist. Der Vorsprung 152 bildet mit seiner Anströmkehle 154 ein Teilstück einer fest, vorzugsweise einstückig mit dem U-förmigen Grundkörper des Kupplungsteils 121 verbundene Ergänzungs-Windabweisleiste, die sich von dem von der Gelenkachse 42 abgewandten Ende des Kupplungsteils 121 bis zu einer Aussparung 150 erstreckt, welche in der U-Basis 148 angeordnet ist und vom leistenartigen Vorsprung 152 bis zum gelenkachsenseitigen Ende der U-Basis 148 reicht und dort randoffen ist. Der Vorsprung 152 endet mit Abstand vor der Gelenkachse 42. Figur 6 zeigt, daß an der der U-Basis 148 zugewandten Oberfläche 156 des wischblattseitigen Kupplungselements 118 ein des Vorsprungs 157 vorhanden ist. Dieser Vorsprung bildet eine Fortsetzung des leistenartigen Vorsprungs 152 und ist fest vorzugsweise einstückig mit dem aus einem Kunststoff hergestellten Kupplungselements 118 verbunden. Dieser Ergänzungsvorsprung 157 reicht vom gelenkachsenseitigen Ende des Kupplungselements 118 und ist auf die Länge der Aussparung 150 abgestimmt, deren Länge bis zum leistenartigen Vorsprung 152 reicht. Die Fortsetzung 157 des leistenartigen Vorsprungs 152 hat im wesentlichen einen Querschnitt, der identisch ist mit dem des Querschnitts der Vorsprungs 152 und hat somit ebenfalls eine Anströmkehle 155. Der leistenartige Vorsprung 152 und seiner kupplungselementseitigen Fortsetzung 157 fluchtet im zusammengebauten Zustand der Verbindungsvorrichtung 116 mit der Windabweisleiste 26 des Wischblattes 10. Weiter ist aus Figur 7 ersichtlich, daß die einander benachbarten Enden 158 und 159 des Vorsprungs 152 und dessen Fortsetzung 157 je einem Radius folgend gekrümmt verlaufen und daß die Zentren der Krümmungsradien 160 bzw. 161 auf der Gelenkachse 42 liegen. Bei dieser Anordnung ist eine problemlose Relativschwenkung zwischen Wischerarm 20 und Wischblatt 10 bzw. zwischen dem Kupplungsteil 121 und dem Kupplungselement 118 möglich, ohne daß dabei ein wesentlicher Spalt im Bereich des Vorsprungs 152 und dessen Fortsetzung 157 entsteht. Die grundsätzliche Ausgestaltung des Kupplungselements 118 und dessen Befestigung am Tragelement 12 entspricht der Anordnung und Ausgestaltung, wie sie beim Ausführungsbeispiel gemäß den Figuren 2 bis 4 geschildert worden ist.

In den Figuren 8 und 9 ist eine weitere, besonders einfache Ausführungsform 216 der erfindungsgemäßen Verbindungsvorrichtung dargestellt. Bei dieser Ausführungsform entspricht das wischblattseitige Kupplungselement 218 dem Kupplungselement 18 gemäß Figur 4. Das wischarmseitige Kupplungsteil 221 weist einen einstückig mit diesem verbundenen Vorsprung 222 auf, der sich vom gelenkachsenfernen Ende des Kupplungsteils 221 aus in Richtung zur Gelenkachse 42 erstreckt. Er endet jedoch mit einem Abstand 219 vor der Gelenkachse 42 (Fig. 9). Dieser Abstand 219 ist erforderlich, damit daß Wischblatt 10 mit dem Wischerarm 20 verbunden werden kann, weil dazu das Wischblatt in eine Position quer zur Wischerarmerstreckung gebracht werden muß (Figur 8). Das Wischblatt muß nämlich in dieser dargestellten Montagestellung mit dem Wischerarm verbunden werden, wobei es in Richtung des Pfeiles 223 mit seinen Gelenkzapfen 41 in die Lagerausnehmungen 44 des wischerarmseitigen Kupplungsteils 221 gelangt, wonach es dann in seine Betriebsposition gemäß Figur 9 gedreht wird. Wie Figur 8 zeigt ist wegen des Überstandes 224 der Windabweisleiste 26 über die Gelenkachse 42 hinaus die Einhaltung des Abstandes oder Freiraumes 219 erforderlich. Er bleibt natürlich auch in Betriebsposition existent, jedoch wird durch den Vorsprung 222 schon ein erheblicher Teil der Längsaussparung 34 geschlossen. Auch bei dieser Ausführungsform ist am Vorsprung 222 eine Anströmkehle 254 vorhanden, welche sich an die Anströmkehle 28 der Windabweisleiste 26 direkt anschließt.

Allen Ausführungsbeispielen ist gemeinsam, daß das Wischblatt 10 an der Seite der oberen Bandfläche 14 des Tragelements 12 mit einer sich beidseitig des Kupplungselements 18 bzw. 118 bzw. 218 in Wischblatt-Längsrichtung erstreckenden, eine Anströmfläche 28 aufweisenden Windabweisleiste 26 versehen ist und daß zumindest an dem wischerarmseitigen Kupplungsteil 21 bzw. 121 bzw. 221 der Verbindungsvorrichtung 16 bzw. 116 bzw. 216 eine sich in Längsrichtung der Windabweisleiste 26 erstreckende Anströmfläche 54 bzw. 154, 156 bzw. 254 ausgebildet ist. Die Anströmflächen sind zweckmäßig als Kehlen ausgeformt.

## Patentansprüche

1. Vorrichtung (16) zum gelenkigen verbinden eines Wischblatts (10) für Scheiben von Kraftfahrzeugen mit einem an diesem geführten, zwischen Umkehrlagen von einem Wischerantrieb bewegbaren, mit einem zur Vorrichtung gehörendem armseitigen Kupplungsteil (21) versehenen Wischerarm (20), mit einem zur Vorrichtung gehörenden, mit dem Kupplungsteil (21) gelenkig verbindbaren wischblattseitigen Kupplungselement (18), welches im Mittelabschnitt eines bandartig langgestreckten, federelastischen Tragelements (12) an dessen von der Scheibe abgewandten oberen Bandfläche (14) angeordnet ist und an der der Scheibe (30) zugewandten unteren Bandfläche (22) des Tragelements (12) sich eine an der Scheibe anlegbare, zum Tragelement längsachsenparallel ausgerichtete Wischleiste (24) befindet, wobei aus jeder Längsseite des Wischblatts (10) ein am Kupplungselement (18) angeordneter Gelenkzapfen (41) ragt, die gemeinsame Längsachse (42) dieser Gelenkzapfen sich quer zur Wischblatt-Längsrichtung in einer zur Scheibe beabstandeten Ebene erstreckt und jeder der die blattseitigen Gelenkmitteln bildende Gelenkzapfen (41) in eine diesen zugeordnete, die wischerarmseitigen Gelenkmittel bildende Lagerausnehmung (44) des Kupplungsteils (21) greift, **dadurch gekennzeichnet, daß** das Wischblatt (10) an der Seite der oberen Bandfläche (14) des Tragelements (12) mit einer sich beidseitig des Kupplungselements (18) in Wischblatt-Längsrichtung erstreckenden, eine Anströmfläche (28) aufweisenden Windabweisleiste (26) versehen ist und daß zumindest an dem wischerarmseitigen Kupplungsteil (21) der Verbindungsvorrichtung (16) eine sich in Längsrichtung der Windabweisleiste (26) erstreckende Anströmfläche (54 bzw. 154 bzw. 254) ausgebildet ist.

2. Vorrichtung nach Anspruch 1, **dadurch gekennzeichnet, daß** die Anströmfläche (54 bzw. 154 bzw. 254) des Kupplungsteils (21 bzw. 121 bzw. 221) an einem an diesem angeordneten leistenartigen Vorsprung (52 bzw. 152 bzw. 222) ausgebildet ist, der wenigstens annähernd mit der Windabweisleiste (26) fluchtet.

3. Vorrichtung nach Anspruch 2, **dadurch gekennzeichnet, daß** der leistenartige Vorsprung (52 bzw. 152 bzw. 222) von dem von der Gelenkachse (42) der Verbindungsvorrichtung (16) abgewandten Ende des Kupplungsteils (21) ausgehend sich zur Gelenkachse (42) hin erstreckt.

4. Vorrichtung nach Anspruch 3, **dadurch gekennzeichnet, daß** das wischerarmseitige Kupplungsteil (121) einen U-förmigen Querschnitt aufweist, daß die Lagerausnehmungen (144) am einen Längs-Endabschnitt in den die Seitenwangen des Kupplungselements (118) überdeckenden U-Schenkeln (146) angeordnet sind, daß der leistenartige Vorsprung (152) an der von den U-Schenkeln (146) abgewandten Seite der U-Basis (148) angeordnet ist und daß der leistenartige Vorsprung (152) mit einer Anströmfläche (154) versehen ist und mit Abstand von der gemeinsamen Gelenkachse (42) der Lagerausnehmungen (144) endet.

5. Vorrichtung nach Anspruch 4, **dadurch gekennzeichnet, daß** die U-Basis (148) im Bereich der Gelenkachse (42) mit einer bis zum Vorsprung (152) reichenden Aussparung (150) versehen ist und daß das Kupplungselement (118) an seiner der U-Basis (148) des Kupplungsteils (121) zugewandten Seite einen die Aussparung (150) durchdringenden Vorsprung (157) hat, an dem eine mit der Anströmfläche (154) des Vorsprungs (152) fluchtenden Ergänzungs-Anströmfläche (160) ausgebildet ist.

6. Vorrichtung nach Anspruch 5, **dadurch gekennzeichnet, daß** die einander benachbarten Enden (158, 159) des Vorsprungs (152) und des Ergänzungsvorsprungs (157) je einem Radius (160; 161) folgend gekrümmt verlaufen und daß die Zentren der Krümmungsradien auf der Gelenkachse (42) liegen.

7. Vorrichtung nach einem der Ansprüche 5 oder 6, **dadurch gekennzeichnet, daß** die Vorsprünge (152 bzw. 157) einstückig mit dem Kupplungsteil (121) bzw. mit dem Kupplungselement (118) verbunden sind.

8. Vorrichtung nach Anspruch 2, **dadurch gekennzeichnet, daß** der leistenförmige Vorsprung (52) des Kupplungsteils (21) zwischen einer Montage- und einer Betriebsposition längsverschiebbar und festsetzbar ist, wobei in Betriebsposition das der Gelenkachse (42) zugewandte Ende des Vorsprungs (52) der Windabweisleiste (26) des Wischblatts (10) benachbart ist.

9. Vorrichtung nach Anspruch 7, **dadurch gekennzeichnet, daß** der leistenförmige Vorsprung (52) an seinem von der Gelenkachse (42) abgewandten Ende und an seiner von seiner Anströmfläche (54) abgewandten Rückseite (55) eine Aussparung (56) hat, die in Längsrichtung gemessen etwa so groß ist, wie der maximale Längsverschiebeweg (58) des Vorsprungs (52).

10. Vorrichtung nach einem der Ansprüche 1 bis 9, **dadurch gekennzeichnet, daß** sowohl das Kupplungsteil (21 bzw. 121 bzw. 221) als auch das Kupplungselement (18 bzw. 118 bzw. 218) aus einem Kunststoff hergestellt sind.

## Claims

1. Device (16) for the articulated connection of a wiper blade (10) for windows of motor vehicles to a wiper arm (20), which is guided on the said wiper blade, can be moved between reversing positions by a wiper drive and is provided with an arm-side coupling part (21) which belongs to the device, having a wiper-blade-side coupling element (18), which belongs to the device, can be connected in an articulated manner to the coupling part (21) and is arranged in the central section of a spring-elastic supporting element (12), which is elongate in the manner of a band, on its upper band surface (14) that faces away from the window, and a wiper strip (24), which can be placed against the window and is orientated parallel to the longitudinal axis of the supporting element, is situated on the lower band surface (22) of the supporting element (12), which surface faces the window (30), a hinge pin (41) which is arranged on the coupling element (18) protruding from each longitudinal side of the wiper blade (10), the common longitudinal axis (42) of these hinge pins extending transversally with respect to the longitudinal direction of the wiper blade in a plane spaced apart from the window, and each of the hinge pins (41) forming the blade-side hinging means engaging in a bearing recess (44) of the coupling part (21), which recess is assigned to the said hinge pins and forms the wiper-arm-side hinging means, **characterized in that** the wiper blade (10) is provided, on the side of the upper band surface (14) of the supporting element (12), with a wind-deflecting strip (26) which extends in the longitudinal direction of the wiper blade on both sides of the coupling element (18) and has an incident-flow surface (28), and **in that** an incident-flow surface (54 or 154 or 254) extending in the longitudinal direction of the wind-deflecting strip (26) is formed at least on the wiper-arm-side coupling part (21) of the connecting device (16).

2. Device according to Claim 1, **characterized in that** the incident-flow surface (54 or 154 or 254) of the coupling part (21 or 121 or 221) is formed on a strip-like projection (52 or 152 or 222) which is arranged on the said coupling part and is aligned at least approximately with the wind-deflecting strip (26).

3. Device according to Claim 2, **characterized in that** the strip-like projection (52 or 152 or 222) extends from that end of the coupling part (21) which faces away from the hinge axis (42) of the connecting device (16) towards the hinge axis (42).

4. Device according to Claim 3, **characterized in that** the wiper-arm-side coupling part (121) has a U-shaped cross section, **in that** the bearing recesses (144) are arranged on the one longitudinal end section in the U-limbs (146) covering the side cheeks of the coupling element (118), **in that** the strip-like projection (152) is arranged on that side of the U-base (148) which faces away from the U-limbs (146), and **in that** the strip-like projection (152) is provided with an incident-flow surface (154) and ends at a distance from the common hinge axis (42) of the bearing recesses (144).

5. Device according to Claim 4, **characterized in that** the U-base (148) is provided in the region of the hinge axis (42) with a cutout (150) reaching as far as the projection (152), and **in that** the coupling element (118) has, on its side facing the U-base (148) of the coupling part (121), a projection (157) which penetrates the cutout (150) and on which a supplementary incident-flow surface (160) which is aligned with the incident-flow surface (154) of the projection (152) is formed.

6. Device according to Claim 5, **characterized in that** the mutually adjacent ends (158, 159) of the projection (152) and of the supplementary projection (157) have a curved profile in each case following a radius (160; 161), and **in that** the centres of the radii of curvature lie on the hinge axis (42).

7. Device according to either of Claims 5 and 6, **characterized in that** the projections (152 and 157) are connected integrally to the coupling part (121) and to the coupling element (118), respectively.

8. Device according to Claim 2, **characterized in that** the strip-shaped projection (52) of the coupling part (21) can be displaced longitudinally and fixed between an installation position and an operational position, with that end of the projection (52) which faces the hinge axis (42) being adjacent to the wind-deflecting strip (26) of the wiper blade (10) in the operational position.

9. Device according to Claim 7, **characterized in that** the strip-shaped projection (52) has, at its end facing away from the hinge axis (42) and on its rear side (55) facing away from its incident-flow surface (54), a cutout (56), which, measured in the longitudinal direction, is approximately the same size as the maximum longitudinal displacement distance (58) of the projection (52).

10. Device according to one of Claims 1 to 9, **characterized in that** both the coupling part (21 or 121 or 221) and the coupling element (18 or 118 or 218) are produced from a plastic.

## Revendications

1. Dispositif (16) pour relier de manière articulée une raclette d'essuie-glace (10) destinée à des vitres de véhicule comprenant
- un bras d'essuie-glace (20) guidé entre des positions d'inversion de mouvement par un moyen d'entraînement et muni d'une pièce de couplage (21) faisant partie du dispositif du côté du bras,
- un élément de couplage (18) faisant partie du dispositif, du côté de la raclette et qui peut être relié de manière articulée à la pièce (21), cet élément étant prévu au milieu d'un élément de support (12) élastique, allongé en forme de lamelle, sur sa face supérieure (14) non tournée vers la vitre alors que la face inférieure (22) de l'élément de support (12) tournée vers la vitre (30) porte une lame d'essuyage (24) s'appliquant contre la vitre et alignée avec son axe longitudinal parallèle à l'élément de support, et
- un pivot d'articulation (41) en saillie de chaque grand côté de la raclette (10) sur l'élément de couplage (18), l'axe longitudinal (42) commun à ces pivots s'étendant transversalement à la direction longitudinale de la raclette dans un plan écarté de la vitre et chacun des pivots (41) formant les moyens d'articulation de la raclette, venant prendre dans une cavité formant palier (44) de la pièce de couplage (21), constituant le moyen d'articulation du bras d'essuie-glace,
**caractérisé en ce qu'**
au niveau du côté de la face supérieure (14) de l'élément de support (12), la raclette (10) comporte une barrette déflectrice (26) ayant une surface d'attaque (28), s'étendant de part et d'autre de l'élément de couplage (18) dans la direction longitudinale de la raclette, et
au moins la pièce de couplage (21) du côté du bras d'essuie-glace du dispositif de liaison (16) comporte une surface d'écoulement (54, 154, 254) s'étendant dans la direction longitudinale de la barrette déflectrice (26).

2. Dispositif selon la revendication 1,
**caractérisé en ce que**
la surface d'écoulement (54, 154, 254) de la pièce de couplage (21, 121, 221) est réalisée sur une partie en saillie (52, 152, 222) en forme de barrette sur la pièce de couplage, cette partie en saillie étant au moins sensiblement alignée sur la barrette déflectrice (26).

3. Dispositif selon la revendication 2,
**caractérisé en ce que**
la partie en saillie en forme de barrette (52, 152, 222) s'étend à partir de l'extrémité de la pièce de couplage (21) non tournée vers l'axe d'articulation (42) du dispositif de liaison (16) jusqu'à l'axe d'articulation (42).

4. Dispositif selon la revendication 3,
**caractérisé en ce que**
la pièce de couplage (121) du bras d'essuie-glace a une section en forme de U,
les cavités formant paliers (144) sont prévues dans un segment d'extrémité longitudinal des branches en U (146) recouvrant les joues latérales de l'élément de couplage (118),
la partie en saillie en forme de longeron (152) est prévue sur le côté de l'embase en U (148) opposé à celui des branches en U (146) et
la partie en saillie (152) en forme de longeron est munie d'une surface d'écoulement (154) et se termine à distance de l'axe d'articulation commun (42) par des cavités formant paliers (144).

5. Dispositif selon la revendication 4,
**caractérisé en ce que**
l'embase en forme de U (148) comporte, au niveau de l'axe d'articulation (42), un évidement (150) arrivant jusqu'à la partie en saillie (152) et
l'élément de couplage (118) présente sur son côté tourné vers l'embase en U (148) de la pièce de couplage (121), une partie en saillie (157) traversant l'évidement (150), partie sur laquelle est réalisée une surface d'écoulement (160), complémentaire, alignée sur la surface d'écoulement (154) de la partie en saillie (152).

6. Dispositif selon la revendication 5,
**caractérisé en ce que**
les extrémités (158, 159) voisines de la partie en saillie (152) et la partie en saillie complémentaire (157) ont chacune un tracé qui suit un rayon (160, 161) et
les centres des rayons de courbure se situent sur l'axe d'articulation (42).

7. Dispositif selon l'une des revendications 5 ou 6,
**caractérisé en ce que**
les parties en saillie (152, 157) font partie de la pièce de couplage (121) ou sont reliées à l'élément de couplage (118).

8. Dispositif selon la revendication 2,
**caractérisé en ce que**
la partie en saillie (52) en forme de barrette de la pièce de couplage (21) peut coulisser longitudinalement et se bloquer entre une position de montage et une position de fonctionnement,
et en position de fonctionnement, l'extrémité de la partie en saillie (52) tournée vers l'axe d'articulation (42) est au voisinage du déflecteur (26) de la raclette (10).

9. Dispositif selon la revendication 7,
**caractérisé en ce que**
la partie en saillie (52) en forme de barrette comporte à son extrémité opposée à l'axe d'articulation (42) et sur son côté arrière (55) opposé à sa surface d'écoulement (54), un évidement (56) qui, mesuré dans la direction longitudinale, a une dimension correspondant sensiblement à la course maximale de coulissement longitudinal (58) de la partie en saillie (52).

10. Dispositif selon l'une des revendications 1 à 9,
**caractérisé en ce que**
la pièce de couplage (21, 121, 221) et l'élément de couplage (18, 118, 218) sont réalisés en matière plastique.
